# EUROPÄISCHE PATENTSCHRIFT

(11) **EP 1 923 592 B1**
(45) Veröffentlichungstag und Bekanntmachung des Hinweises auf die Patenterteilung: **14.10.2009**
(21) Anmeldenummer: 07033542.7
(22) Anmeldetag: 06.11.2007
(51) Int. Cl.: F16D 66/00

(54) **Brems- oder Kupplungsbelag mit kapazitivem Kraftsensor**
Brake or gear lining with capacitative force sensor
Garniture de frein ou d'embrayage équipé d'un capteur capacitif de forces

(30) Priorität: 14.11.2006 DE 102006053489
(43) Veröffentlichungstag der Anmeldung: 21.05.2008
(73) Patentinhaber: TMD Friction Services GmbH, 51381 Leverkusen (DE)
(72) Erfinder: Degenstein, Thomas, 64287 Darmstadt (DE); Macherey, Matthias, 35781 Weilburg (DE); Rückert, Martin, 55129 Mainz (DE)
(74) Vertreter: Müller, Eckhard

(56) Entgegenhaltungen:
- WO-A-20/05058661
- DE-A1- 10 230 008
- DE-A1- 10 348 829
- DE-T5- 10 392 997
- US-A1- 2004 187 591

## Beschreibung

Die vorliegende Erfindung betrifft einen Bremsbelag oder Kupplungsbelag mit einem integrierten Kraftsensor, der zur Erfassung von auf den Brems- oder Kupplungsbelag einwirkenden Kräften ausgebildet ist.

### Stand der Technik

Ein Brems- oder Kupplungsbelag mit integrierter Kraftmessung ist beispielsweise aus der DE 102 59 629 A1 bekannt. Dieser weist zum Messen von Kräften, die auf den Reibbelag einer Fahrzeugbremse oder einer Kupplung einwirken eine funktionale Schicht mit einem elektrischen Widerstand auf, von welchem die am Belag vorherrschenden Kräfte abgeleitet werden können. Als funktionale Schicht ist hierbei insbesondere eine piezoresistive Hartstoffschicht vorgesehen, die bei Verformung bzw. bei Druckbeaufschlagung ihren elektrischen Widerstand ändert.

DE-A-103 48 829 ermittelt die Spannkraft durch messen der Änderungen des elektrischen Widerstands eines Verbindungsschicht.

Zur separaten Erfassung von auf den Reibbelag in unterschiedlichen Richtungen einwirkenden Kräften, wie etwa bei einer Scheibenbremse in Umfangs- und Axialrichtung, ist eine weitere, in Umfangsrichtung des Reibbelags belastete zweite funktionale Schicht mit einem zweiten elektrischen Widerstand vorgesehen. Hierbei kann aus dem zweiten elektrischen Widerstand der Kraftanteil in Umfangsrichtung abgeleitet werden, sodass die aus dem ersten elektrischen Widerstand abgeleitete Kraft ggf. um den Kraftanteil in Umfangsrichtung korrigiert werden kann.

Nachteilig bei einer solchen auf elektrischen Widerständen basierenden Druck- oder Kraftmessung ist, dass die unterschiedlichen Kraftkomponenten in Axial- und Umfangsrichtung nicht unmittelbar gemessen werden können, sondern lediglich durch eine mitunter aufwendige Auswertung ggf. verbunden mit einer Korrektur ermittelt werden müssen.

Für die separate Erfassung unterschiedlicher Kraftkomponenten ist zudem das Anbringen mehrerer funktionaler Schichten erforderlich, die voneinander räumlich getrennt angeordnet und jeweils separat mit einer Auswerteeinheit elektrisch verbunden werden müssen. Zudem erfordert die auf einer elektrischen Widerstandsänderung basierende Kraftmessung einen permanenten oder doch zumindest zeitweiligen Stromfluss durch die funktionale Schicht.

Aus der DE 103 92 997 T5 ist ein kapazitiver Sensor zum Detektieren der Dicke oder Betätigung eines Kraftfahrzeugbremsklotzes bekannt. Dieser Bremsklotz weist ein erstes Paar kapazitiver Platten auf, die im Wesentlichen senkrecht zur Belagträgerplatte angeordnet sind, sodass diese zusammen mit dem Reibbelag beim Bremsen verschleißen und dabei ihr Länge und somit ihre Kapazität ändern. Zudem ist ein weiteres Paar kapazitiver Platten vorgesehen, die im Wesentlichen parallel zur Ebene der Belagträgerplatte verlaufen. Dieses zweite Paar kapazitiver Platten stellt eine Referenzkapazität dar. Zweck dieser Referenzkapazität ist es, dass sich diese mit Verschleiß des Reibbelags nicht ändert.

Schließlich ist aus der DE 10 2005 013 142 A1 eine kapazitive Wegmessung zwischen einem Bremssattel und einem Arm des Brems- und Radträgers beschrieben. Die Anordnung solch kapazitiver Elemente erlaubt eine Messung elastischer Verformung des Bremsträgers eines Kraftfahrzeugs. Da diese Verformung allenfalls in einem empirisch zu ermittelnden Verhältnis zur vorherrschenden Bremskraft steht, ist hierüber eine unmittelbare Messung der beim Bremsen auftretenden Kräfte nur unzulänglich möglich.

### Aufgabe

Der vorliegenden Erfindung liegt daher die Aufgabe zugrunde, einen Brems- oder Kupplungsbelag mit einem integrierten und verbesserten Kraftsensor zur Verfügung zu stellen, der zum einen eine unmittelbare Erfassung unterschiedlicher Kraftkomponenten ermöglicht und kostengünstig herstellbar ist. Zudem soll der Kraftsensor ein geringes Einbaumaß aufweisen und eine einfache Auswertung erfasster Messsignale sowie eine einfache Verkabelung und Konnektierung zu einer Auswerteeinheit ermöglichen.

### Erfindung und vorteilhafte Wirkungen

Die der Erfindung zugrunde liegende Aufgabe wird mittels eines Brems- oder Kupplungsbelags gemäß Patentanspruch 1 und einem Verfahren zur Messung einer Kraft- oder Druckeinwirkung auf einen Brems- oder Kupplungsbelag gemäß Patentanspruch 13 gelöst. Weitere vorteilhafte Ausführungsformen sind in den Unteransprüchen angegeben.

Der erfindungsgemäße Brems- oder Kupplungsbelag weist eine Belagträgerplatte und zumindest einen Reibbelag auf, wobei zwischen dem Reibbelag und der Trägerplatte zumindest ein kapazitives Element angeordnet ist, dessen elektrische Kapazität sich mit einer auf den Brems- oder Kupplungsbelag einwirkenden Kraft oder einem entsprechenden Druck ändert. Das kapazitive Element fungiert somit als kapazitiver Kraft- oder Drucksensor, welcher in die Struktur des Brems- oder Kupplungsbelags integriert ist.

Das als kapazitive Kraft- oder Drucksensor ausgebildete kapazitive Element nimmt nur ein geringes Maß an Bauraum in Anspruch. Er ist insbesondere als flache Schicht ausgebildet, welche zwischen dem Reibbelag und ggf. einer Underlayermasse und der Trägerplatte angeordnet ist. Das kapazitive Element ist somit ein integraler Bestandteil des Brems- oder Kupplungsbelags, wodurch das Anbringen gesonderter Druck- oder Kraftsensoren im Bereich der Bremse entfallen kann.

Von Vorteil ist insbesondere, dass die Implementierung eines Kraft- oder Drucksensors prinzipiell mittels eines einzigen kapazitiven Elements durchgeführt werden kann. Solche Ausführungen sind insbesondere zur Realisierung kostengünstiger Applikationen geeignet. Solche Ausführungsformen weisen daher ein breites Anwendungsspektrum für vielfältige Einsatzmöglichkeiten, gerade im Bereich von Fahrzeugen und Bremsen des unteren Preissegments auf.

Die erfindungsgemäße Ausbildung eines in den Brems- oder Kupplungsbelag integrierten auf einem kapazitivem Messprinzip basierenden Kraft- oder Drucksensor hat den Vorteil, dass die Erfassung von Messwerten ohne nennenswerten Stromfluss, somit quasi stromlos erfolgen kann. Gegenüber elektroresistiven Sensoren weisen solche kapazitiven Drucksensoren eine geringe Empfindlichkeit gegenüber Temperaturschwankungen auf, was insbesondere im Bereich einer Fahrzeugbremse für die Genauigkeit der zu ermittelnden Kräfte von Vorteil ist.

Nach einer ersten vorteilhaften Ausführungsform der Erfindung ist das als Kraft- oder Drucksensor ausgebildete kapazitive Element zur Erfassung einer relativen Verschiebung zwischen dem Reibbelag und der Belagträgerplatte ausgebildet. Hierfür weist das kapazitive Element einen zweikomponentigen Aufbau auf, wobei eine Komponente fest mit der Belagträgerplatte und wobei die andere Komponente fest mit dem Reibbelag verbunden ist.

Das zweikomponentige kapazitive Element ist in der Schnittstelle zwischen Belagträgerplatte und Reibbelag angeordnet und dient als hochsensibler Sensor zur Erfassung von Relativbewegungen zwischen Reibbelag und Belagträgerplatte.

Hierbei ist vorgesehen, dass die beiden Komponenten derart miteinander verbunden sind, dass deren Relativbewegung zueinander innerhalb gewisser Grenzen möglich ist.

Das kapazitive Element kann sich über die gesamte Fläche des Reibbelags und/oder der Belagträgerplatte erstrecken. Es ist jedoch prinzipiell ausreichend, wenn zumindest ein kapazitives Element lediglich lokal und bereichsweise an der Schnittstelle zwischen Reibbelag und Belagträgerplatte angeordnet ist.

Weiterhin ist denkbar, dass in der Ebene zwischen Reibbelag und Belagträgerplatte mehrere räumlich voneinander getrennte kapazitive Elemente implementiert werden, sodass eine Druck- oder Kraftmessung über die Fläche der Reibbelags ortsaufgelöst ermittelt werden kann.

Nach einer Weiterbildung ist vorgesehen, dass das kapazitive Element zumindest zwei aufeinander liegende und voneinander elektrisch isolierte funktionale Schichten mit elektrisch leitenden Strukturen aufweist. Die elektrisch leitenden Strukturen einer funktionalen Schicht kommen den elektrisch leitenden Strukturen der jeweils anderen funktionalen Schicht unmittelbar gegenüber zu liegen.

Jeder Komponente des kapazitiven Elements ist somit eine funktionale Schicht zugeordnet. Eine Relativverschiebung der gegenüber zu liegen kommenden und typischerweise jeweils mit Belagträgerplatte bzw. Reibbelag fest verbundenen funktionalen Schichten ist eine messbare Größe, welche zur Ermittlung von auf den Bremsbelag einwirkenden Druck- und/oder Kraftkomponenten ausgewertet werden kann.

Durch die vorzugsweise mittels einer dünnen Folie oder Beschichtung realisierbare elektrische Isolation zwischen den funktionalen Schichten kann mit Hilfe der elektrisch leitenden Strukturen eine elektrische Kapazität zwischen den elektrisch leitenden Strukturen bestimmt werden.

Diese ändert sich bei einer relativen Verschiebung der aufeinander liegenden funktionalen Schichten infolge einer Kraft- oder Druckeinwirkung auf den Brems- oder Kupplungsbelag. Eine messbare elektrische Kapazität oder Kapazitätsänderung ist daher ein direktes Maß für eine relative Verschiebung, welche regelmäßig auf eine Kraft- oder Druckeinwirkung zurückzuführen ist.

Die elektrische Isolierung zwischen den funktionalen Schichten kann prinzipiell durch jedwedes geeignete isolierende Material, insbesondere aber auch durch einen Klebstoff realisiert werden, welcher vorzugsweise eine Elastizität aufweist, die eine Relativverschiebung zwischen den beiden funktionalen Schichten in einem vorgegebenen Umfang ermöglicht.

Mit einer entsprechenden Skalierung und Kalibrierung kann anhand einer messbaren Kapazität des kapazitiven Elements sowohl eine momentan vorhandene Kraft, als auch eine Kraft- oder Druckänderung in Echtzeit ermittelt werden.

Nach einer weiteren bevorzugten Ausführungsform der Erfindung ist vorgesehen, dass für eine separate Erfassung unterschiedlicher auf den Belag einwirkender Kraft- oder Druckkomponenten an jeder der funktionalen Schichten des kapazitiven Elements zumindest zwei elektrisch leitende Strukturen unterschiedlicher Geometrie vorgesehen sind. Hierbei sind elektrisch leitende Strukturen gleichartiger Geometrie jeweils zur Erfassung einer bestimmten Kraft- oder Druckkomponente ausgebildet.

Nach einer Weiterbildung korrespondieren die elektrisch leitenden Strukturen gleichartiger Geometrie der unmittelbar benachbart angeordneten funktionalen Schichten miteinander. Direkt aufeinander zu liegen kommende elektrisch leitende Strukturen von unmittelbar benachbart angeordneten funktionalen Schichten weisen hierbei jeweils eine gleichartige Geometrie auf.

Entsprechend der geometrischen Ausgestaltung der miteinander korrespondierenden elektrisch leitenden Strukturen der funktionalen Schicht des kapazitiven Elements können die verschiedenen, an der Bremse oder an der Kupplung auftretenden Kraftkomponenten, insbesondere solche in Axial- und Umfangsrichtung, separat voneinander und unmittelbar gemessen werden.

Eine elektronische Korrektur einzelner Kraftanteile ist nicht mehr erforderlich, sodass letztlich die elektronische Auswertung zur Bestimmung von Kraft- oder Druckkomponenten wesentlich vereinfacht werden kann.

Zudem können die unterschiedlichen Kraftkomponenten mit einem einzigen kapazitiven sensorischen Element erfasst werden. Das Anbringen mehrerer räumlich voneinander getrennt angeordneter Sensoren ist somit nicht mehr erforderlich, was sich vorteilhaft auf die Herstellungskosten und den Montageaufwand auswirkt.

Weiterhin ist vorgesehen, dass die elektrisch leitenden Strukturen bereichsweise streifenartig ausgebildet sind. Miteinander korrespondierende streifenartige Strukturen gegenüberliegender funktionaler Schicht sind vorzugsweise parallel zueinander ausgerichtet. Sie können jedoch auch schräg oder senkrecht zueinander ausgerichtet sein.

Des Weiteren kann vorgesehen sein, dass eine funktionale Schicht mehrere Teilbereiche streifenartig ausgebildeten elektrisch leitenden Strukturen aufweist, wobei die Ausrichtung der Streifen innerhalb der Teilbereiche parallel verläuft. Die Streifen unterschiedlicher Teilbereiche oder Flächensegmente einer funktionalen Schicht können schräg zueinander, insbesondere senkrecht zueinander verlaufen

Nach einer Weiterbildung der Erfindung sind einige der elektrisch leitenden Strukturen der funktionalen Schichten bereichsweise als Flächenelemente mit runder, ovaler oder elliptischer, ringförmiger, drei- oder mehreckiger, insbesondere quadratischer oder rechteckiger Geometrie ausgebildet.

Hierbei ist weiterhin vorgesehen, dass miteinander korrespondierende Flächenelemente der benachbart aufeinander liegenden funktionalen Schichten eine unterschiedliche Flächenausdehnung und somit unterschiedlich große Flächen aufweisen. Insbesondere kommt hierbei das kleinere Flächenelement einer funktionalen Schicht vollständig innerhalb des Umfangs des größeren Flächenelements der gegenüberliegenden funktionalen Schicht zu liegen. Das kleinere Element wird somit vollständig vom größeren gegenüberliegend angeordneten Element überdeckt.

Hierdurch soll erreicht werden, dass selbst bei einer Verschiebung der funktionalen Schichten in der Ebene das kleinere Flächenelement nach wie vor vollständig vom gegenüberliegenden größeren Flächenelement überdeckt ist und auch infolge einer Verschiebung überdeckt bleibt. Zur Erfassung einer relativen Verschiebung der funktionalen Schichten in Richtung parallel zu deren Flächennormalen, bezogen auf eine Bremse eine Verschiebung in Axialrichtung, sind die Flächenelemente vorgesehen, während die streifenartig ausgebildeten elektrisch leitenden Strukturen der funktionalen Schichten zur Erfassung einer relativen Verschiebung senkrecht zur Flächennormalen der funktionalen Schichten vorgesehen sind.

Dadurch, dass das kleinere Flächenelement einer funktionalen Schicht auch bei einer Verschiebung in der Ebene zwischen den funktionalen Schichten vollständig innerhalb einer Projektion des gegenüberliegenden größeren Flächenelements bleibt, ändert sich die zwischen den beiden Flächenelementen messbare elektrische Kapazität bei einer Verschiebung in der Ebene, d.h. bei einer Verschiebung in Umfangsrichtung nicht oder nur in einem vernachlässigbaren Maß.

Die miteinander korrespondierenden Flächenelemente sind somit vorzugsweise zur Erfassung einer Verschiebung der funktionalen Schichten parallel zur Flächennormalen ausgebildet. Eine solche Verschiebung erfolgt durch eine Veränderung der auf den Bremsbelag wirkenden Kraft in Axialrichtung.

Demgegenüber eignen sich die miteinander korrespondierenden und gegenüber zu liegen kommenden streifenartigen Strukturen der funktionalen Schichten insbesondere für die Erfassung von relativen Bewegungen der funktionalen Schichten in Umfangsrichtung bezogen auf eine Bremse oder Kupplung.

Dementsprechend ist für die Erfassung der Kapazität des kapazitiven Druck- oder Kraftsensors vorgesehen, dass die Kapazität zwischen den Flächenelementen getrennt von der Kapazität der Streifenelemente ermittelt wird. Die zwischen den Flächenelementen messbare Kapazität ist somit ein direktes Maß für die Axialkraft, während die zwischen den streifenartig ausgebildeten Strukturen messbare Kapazität ein direktes Maß für die in Umfangsrichtung wirkende Scherkraft bei einem Bremsbelag ist.

Nach einer weiteren bevorzugten Ausführungsform der Erfindung sind die funktionalen Schichten des kapazitiven Elements als Platinen, Substrate oder als Folie mit einer Schichtdicke im Millimeter- bis Submikrometerbereich ausgebildet. Je nach verwendetem Material und je nach vorgesehenem Verfahren zum Aufbringen der elektrisch leitenden Strukturen auf die funktionale Schicht ergeben sich unterschiedliche Schichtdicken, welche jedoch stets ein geringes Einbaumaß für den kapazitiven Sensor ermöglichen.

Es versteht sich von selbst, dass für die funktionalen Schichten nur solche Materialien und Fertigungsverfahren infrage kommen, welche einem thermischen und mechanischen Anforderungsprofil eines Brems- oder Kupplungsbelags ohne weiteres standhalten.

Insbesondere muss die funktionale Schicht derart ausgebildet werden, das eine messbare relative Verschiebung der Schichten erst in einem Druck- oder Kraftintervall auftreten, welches für eine Brems- oder Kupplungseinrichtung von Interesse ist.

Nach einer weiteren Ausführungsform ist um das zumindest eine kapazitive Element herum eine elektrische Abschirmung vorgesehen. Mittels einer solchen Abschirmung sollen etwaige für die Messung der Kapazität störende Einflüsse minimiert werden. Die Abschirmung dient somit einer Verbesserung der elektromagnetische Verträglichkeit (EMV) der in den Brems- oder Kupplungsbelag integrierten Sensorik.

Als Abschirmung können dünne Schichten bzw. Folien aus einem elektrisch leitenden Material Verwendung finden, die abgewandt von der Schnittstelle zwischen den beiden funktionalen Schichten angeordnet sind. Die kapazitiven Elemente der funktionalen Schichten können somit effektiv vor elektromagnetischen Störungen abgeschirmt werden. Alternativ oder zusätzlich kann auch die aus Metall gefertigte Belagträgerplatte selbst als elektromagnetische Abschirmung dienen, sodass eine Abschirmung auch bereits mit nur einen zusätzlichen Folie oder elektromagnetischen Schicht realisiert werden kann.

Nach einer weiteren bevorzugten Ausführungsform ist vorgesehen, dass zur Kompensation von Temperatureinflüssen ein gekapseltes Kalibrierelement vorgesehen ist. Unter einem gekapselten Kalibrierelement im Sinne der Erfindung ist ein elektronisches Bauteil zu verstehen, welches unter Belastung des Brems- oder Kupplungsbelags keinem Druck bzw. keiner nennenswerten Kraft ausgesetzt ist, aber elektrisch mit der in den Belag integrierten Sensorik verbunden ist.

Dieses als Kalibrierelement ausgebildete elektronische Bauteil kann beispielsweise als kapazitives elektronisches Bauteil, wie etwa ein Kondensator oder als Thermowiderstand ausgebildet sein. Das Kalibrierelement ist im Betrieb vorzugsweise vergleichbaren thermischen Bedingungen ausgesetzt wie die funktionalen Schichten des kapazitiven Elements, die zur Kraft- bzw. Druckmessung vorgesehen sind. Das Kalibrierelement ist innerhalb einer stabilen Ummantelung oder einer Kapsel angeordnet, welche die extern auf den Belag einwirkenden Kräfte aufnimmt und das innerhalb der Kapsel angeordnete Kalibrierelement vor mechanischer Belastung schützt.

Mittels des Kalibrierelements kann zum einen die Betriebstemperatur des Brems- oder Kupplungsbelags in situ gemessen werden. Zum anderen ermöglicht das Kalibrierelement eine Korrektur oder Kompensation temperaturbedingter Abweichungen der vom kapazitiven Element ermittelten Messwerte.

Nach einem weiteren unabhängigen Aspekt betrifft die Erfindung ein Verfahren zur Messung einer Kraft- oder Druckeinwirkung mittels eines erfindungsgemäßen Brems- oder Kupplungsbelags. Hierbei wird zur Messung der am Brems- oder Kupplungsbelag einwirkenden Kraft jeweils die Kapazität des kapazitiven Elements gemessen. Unter der Messung der Kapazität des kapazitiven Elements im Sinne der Erfindung ist insbesondere die Messung zumindest zweier Teilkapazitäten, nämlich der Kapazitäten der streifenartig ausgebildeten elektrisch leitenden Strukturen der funktionalen Schichten und der Flächenelemente vorgesehen. Dabei ist vorgesehen, dass eine Kalibrierung des zumindest einen kapazitiven Elements während eines Press- und/oder Härtevorganges bei der Herstellung des Brems- oder Kupplungsbelags durchgeführt wird. Da das kapazitive Element in den Belag integriert ist kann bereits während des Pressvorganges oder während des sich zeitlich daran anschließenden Härtevorganges eine Messung der Kapazität des kapazitiven Elements erfolgen. Da der während dieses Vorganges auf den Reibbelag ausgeübte Pressdruck eine bekannte Größe ist, kann eine einfache und zuverlässige Kalibrierung des kapazitiven Druck- oder Kraftsensors bereits bei der Fertigung des Reibbelags des Brems- oder Kupplungsbelages kosteneinsparend durchgeführt werden.

### Ausführungsbeispiel

Weitere Ziele, Merkmale, Vorteile sowie vorteilhafte Anwendungsmöglichkeiten der Erfindung werden mittels des nachfolgend beschriebenen Ausführungsbeispiels anhand der Zeichnungen erläutert. Hierbei bilden sämtliche beschriebenen und/oder bildlich dargestellten Merkmale in ihrer sinnvollen Kombination den Gegenstand der vorliegenden Erfindung, auch unabhängig von den Patentansprüchen oder deren Rückbeziehung.

Es zeigen:
- Figur 1: eine schematische Explosionsdarstellung des erfindungsgemäßen Reib- oder Kupplungsbelags und
- Figur 2: eine schematische Darstellung zweier zu Illustrationszwecken nebeneinander angeordneter funktionaler Schichten.

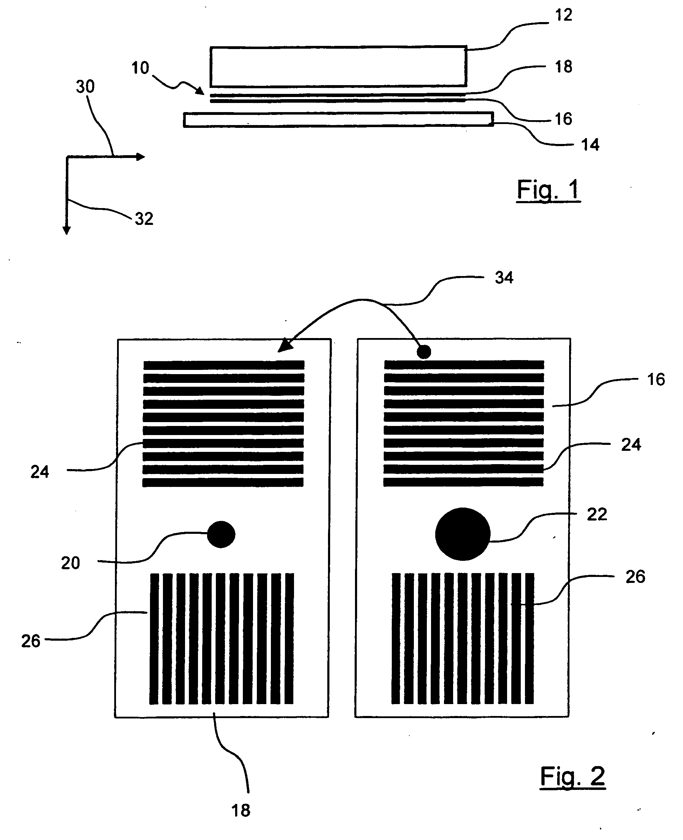

Figur 1 zeigt den schematischen Aufbau des Brems- oder Kupplungsbelags, welcher einen Reibbelag 12 und eine Trägerplatte 14 aufweist. Zwischen Trägerplatte 14 und Reibbelag ist das als Sensor ausgebildete kapazitive Element 10 angeordnet, welches wiederum zwei funktionale Schichten 16, 18 aufweist. In dem gezeigten Beispiel sind die funktionalen Schichten 16, 18 durchgehend zwischen Belagträgerplatte 14 und Reibbelag 12 vorgesehen. Eine lediglich bereichsweise Anordnung innerhalb der Belagstruktur kann jedoch bereits für die prinzipielle Funktionsweise des kapazitiven Sensors ausreichen.

Die beiden in Figur 2 neben- und nicht aufeinander dargestellten funktionalen Schichten 18, 16 weisen unterschiedliche elektrisch leitende Strukturen 20, 22, 24, 26 auf. In diesem Beispiel sind zwei unterschiedliche Grundgeometrien, nämlich streifenförmig 24, 26 und rund 20, 22 verwirklicht.

Im aufeinander geklappten Zustand, wir er in Figur 1 illustriert ist und durch den Pfeil 34 der Figur 2 angedeutet ist, kommen die streifenartigen elektrisch leitenden Strukturen 24, 26 der funktionalen Schicht 18 den streifenförmig ausgebildeten Strukturen 24, 26 der funktionalen Schicht 16 gegenüber zu liegen. Diese korrespondieren folglich miteinander. Entsprechendes gilt für die kreisförmigen ausgebildeten Flächenelemente 20, 22 der beiden funktionalen Schichten 18, 16.

Die streifenartig ausgebildeten elektrischen Leiter 24, 26 sind insbesondere für eine Messung einer Verschiebung in Umfangsrichtung einer Bremse oder Kupplung vorgesehen, die mit dem Pfeil 30 in Figur 1 angedeutet ist.

Die in Figur 2 horizontal verlaufenden Streifen 24 sind zur Erfassung einer Relativverschiebung der funktionalen Schichten 16, 18 in Vertikalrichtung vorgesehen während die vertikal verlaufenden Streifen 26 zur Erfassung einer Horizontalbewegung in der Darstellung gemäß Figur 2 ausgebildet sind. Die streifenartigen elektrisch leitenden Strukturen sind vorzugsweise jeweils zur Erfassung einer Bewegung senkrecht zum Streifenverlauf ausgebildet.

Die kreisförmig ausgebildeten Flächenelemente 20, 22, von denen das Flächenelement 20 im aufeinandergeklappten Zustand vollständig vom Flächenelement 22 der gegenüberliegenden funktionalen Schicht überdeckt wird, sind zur Erfassung von Druck- oder Kraftkomponenten in Axialrichtung, das heißt in Richtung des Pfeils 32 vorgesehen.

Durch die vollständig überdeckte Anordnung der beiden Flächenelemente 20, 22, welche auch bei einer Verschiebung der funktionalen Schichten 16, 18 in Pfeilrichtung 30 vollständig erhalten bleibt, wird die zwischen den Flächenelementen 20, 22 messbare Kapazität nicht oder nur unwesentlich verändert. Eine zwischen den Flächenelementen 20, 22 messbare Kapazitätsänderung geht somit selektiv stets auf eine relative Verschiebung der funktionalen Schichten 16, 18 in Pfeilrichtung 30 zurück.

Die elektrische Kontaktierung der elektrisch leitenden Strukturen unterschiedlicher Geometrie erfolgt jeweils getrennt voneinander. Die einzelnen, innerhalb eines Flächensegments der funktionalen Schicht parallel angeordneten Streifen 24, 26 können parallel oder in Serie zueinander geschaltet sein. Je nach Anforderungsprofil und Einsatzgebiet können die streifenartig ausgebildeten Strukturen 24, 26 im hier dargestellten oberen und unteren Flächensegment einer funktionalen Schicht 18 oder 16 auch untereinander miteinander elektrisch verbunden sein.

Zwischen den funktionalen Schichten 16, 18 ist zumindest eine elektrisch isolierende nicht explizit dargestellte Schicht vorgesehen. Diese kann beispielsweise als Klebeschicht ausgebildet sein, wobei die Klebeschicht eine Relativverschiebung der funktionalen Schichten unter Druck- oder Krafteinwirkung innerhalb gewisser Grenzen ermöglicht.

In den Ausführungsbeispielen der Figuren 1 und 2 sind funktionale Schichten 16, 18 mit je zwei unterschiedlich ausgebildeten elektrisch leitenden Strukturen dargestellt. Gleichwohl können nach der Erfindung auch funktionale Schichten Verwendung finden, die jeweils nur elektrisch leitende Strukturen gleichartiger Geometrie, wie etwa streifenförmig oder kreisförmig aufweisen.

Das Design und die konkrete Ausgestaltung der elektrisch leitenden Strukturen 20, 22, 24, 26 kann je nach dem konkreten Anforderungsprofil des Belags 10 gewählt werden. So kann eine low-cost Implementierung für eine Fahrzeugbremse beispielsweise lediglich mit Hilfe von streifenartig angeordneten elektrisch leitenden Strukturen 24, 26 realisiert werden.

### Bezugszeichenliste

- 10: Kapazitives Element
- 12: Reibbelag
- 14: Belagträgerplatte
- 16: Funktionale Schicht
- 18: Funktionale Schicht
- 20: Flächenelement
- 22: Flächenelement
- 24: Streifen
- 26: Streifen
- 30: Umfangsrichtung
- 32: Axialrichtung
- 34: Projektion

## Patentansprüche

1. Brems- oder Kupplungsbelag mit einer Belagträgerplatte (14) und einem Reibbelag (12) und mit zumindest einem zwischen Reibbelag und Trägerplatte angeordneten kapazitiven Element (10), dessen Kapazität sich mit einer auf den Brems- oder Kupplungsbelag einwirkenden Kraft ändert.

2. Brems- oder Kupplungsbelag nach Anspruch 1, **dadurch gekennzeichnet, dass** das kapazitive Element (10) zur Erfassung einer relativen Verschiebung von Reibbelag (12) und Belagträgerplatte (14) ausgebildet ist.

3. Brems- oder Kupplungsbelag nach Anspruch 1 oder 2, **dadurch gekennzeichnet, dass** das kapazitive Element (10) zumindest zwei aufeinander liegende voneinander elektrisch isolierte funktionale Schichten (16, 18) mit elektrisch leitenden Strukturen (20, 22, 24, 26) aufweist.

4. Brems- oder Kupplungsbelag nach Anspruch 3, **dadurch gekennzeichnet, dass** zur separaten Erfassung unterschiedlicher Kraft- oder Druckkomponenten (30, 32) an jeder funktionalen Schicht (16, 18) zumindest zwei elektrisch leitende Strukturen (20, 22, 24, 26) unterschiedlicher Geometrie vorgesehen sind.

5. Brems- oder Kupplungsbelag nach Anspruch 3 oder 4, **dadurch gekennzeichnet, dass** aufeinander zu liegen kommende elektrisch leitende Strukturen (20, 22, 24, 26) unmittelbar benachbart angeordneter funktionaler Schichten (16, 18) jeweils eine gleichartige Geometrie aufweisen.

6. Brems- oder Kupplungsbelag nach einem der vorhergehenden Ansprüche 3 bis 5, **dadurch gekennzeichnet, dass** die elektrisch leitenden Strukturen (24, 26) bereichsweise streifenartig ausgebildet sind.

7. Brems- oder Kupplungsbelag nach einem der vorhergehenden Ansprüche 3 bis 6, **dadurch gekennzeichnet, dass** die elektrisch leitenden Strukturen bereichsweise als Flächenelemente (20, 22) mit runder, elliptischer, ringförmiger, drei- oder mehreckiger, insbesondere quadratischer oder rechteckiger Geometrie ausgebildet sind.

8. Brems- oder Kupplungsbelag nach Anspruch 7, **dadurch gekennzeichnet, dass** die Flächenelemente (20, 22) von benachbart aufeinander liegenden funktionalen Schichten (16, 18) unterschiedlich große Flächen aufweisen, wobei das kleinere Flächenelement (20) vollständig innerhalb des Umfangs des größeren Flächenelements (22) zu liegen kommt.

9. Brems- oder Kupplungsbelag nach einem der vorhergehenden Ansprüche 7 oder 8, **dadurch gekennzeichnet, dass** die Flächenelemente (20, 22) zur Erfassung einer relativen Verschiebung der funktionalen Schichten (16, 18) in Richtung (32) parallel zu deren Flächennormalen ausgebildet und dass die streifenartigen elektrisch leitenden Strukturen zur Erfassung einer relativen Verschiebung der funktionalen Schichten in Richtung (30) senkrecht zu ihrer Flächennormalen vorgesehen sind.

10. Brems- oder Kupplungsbelag nach einem der vorhergehenden Ansprüche, **dadurch gekennzeichnet, dass** die funktionalen Schichten (16, 18) als Platinen, Substrate oder als Folie mit einer Schichtdicke im Millimeter bis Submikrometerbereich ausgebildet.

11. Brems- oder Kupplungsbelag nach einem der vorhergehenden Ansprüche, **dadurch gekennzeichnet, dass** um das zumindest eine kapazitive Elements (10) herum eine elektrische Abschirmung vorgesehen ist.

12. Brems- oder Kupplungsbelag nach einem der vorhergehenden Ansprüche, **dadurch gekennzeichnet, dass** zur Kompensation von Temperatureinflüssen ein gekapseltes Kalibrierelement vorgesehen ist.

13. Verfahren zur Messung einer Kraft- oder Druckeinwirkung auf einen Brems- oder Kupplungsbelag nach einem der vorhergehenden Ansprüche, wobei zur Messung der am Brems- oder Kupplungsbelag einwirkenden Kraft die Kapazität des kapazitiven Elements gemessen wird.und eine Kalibrierung des zumindest einen kapazitiven Elements (10) während eines Press- und/oder Härtevorganges bei der Herstellung des Brems- oder Kupplungsbelags durchgeführt wird.

## Claims

1. Brake or clutch lining with a lining carrier plate (14) and a friction lining (12) and with at least one capacitive element (10), which is arranged between friction lining and carrier plate and the capacitance of which varies with a force acting on the brake or clutch lining.

2. Brake or clutch lining according to claim 1, **characterised in that** the capacitive element (10) is constructed for detection of a relative displacement of friction lining (12) and lining carrier plate (14).

3. Brake or clutch lining according to claim 1 or 2, **characterised in that** the capacitive element (10) comprises at least two functional layers (16, 18), which lie one on the other and are electrically insulated from one another, with electrically conductive structures (20, 22, 24, 26).

4. Brake or clutch lining according to claim 3, **characterised in that** at least two electrically conductive structures (20, 22, 24, 26) of different geometry are provided for separate detection of different force or pressure components (30, 32) at each functional layer (16, 18).

5. Brake or clutch lining according to claim 3 or 4, **characterised in that** electrically conductive structures (20, 22, 24, 26), which come to lie one on the other, of functional layers (16, 18) arranged directly adjacent respectively have an identical geometry.

6. Brake or clutch lining according any one of the preceding claims 3 to 5, **characterised in that** the electrically conductive structures (24, 26) are formed to be strip-like in regions.

7. Brake or clutch lining according to any one of the preceding claims 3 to 6, **characterised in that** the electrically conductive structures are formed in regions as areal elements (20, 22) with round, elliptical, annular, triangular or polygonal, particularly square or rectangular, geometry.

8. Brake or clutch lining according to claim 7, **characterised in that** the areal elements (20, 22) have functional layers (16, 18), which lie adjacently one on the other, of areas of different size, wherein the smaller areal element (20) comes to lie completely within the circumference of the larger areal element (22).

9. Brake or clutch lining according to one of the preceding claims 7 and 8, **characterised in that** the areal elements (20, 22) are constructed for detection of a relative displacement of the functional layers (16, 18) in a direction (32) parallel to the area normals thereof and that the strip-like electrically conductive structures are provided for detection of a relative displacement of the functional layers in a direction (30) perpendicular to the area normals thereof.

10. Brake or clutch lining according to any one of the preceding claims, **characterised in that** the functional layers (16, 18) are constructed as boards, substrates or as film with a layer thickness in the millimetre to submicron range.

11. Brake or clutch lining according to any one of the preceding claims, **characterised in that** an electrical screen is provided around the at least one capacitive element (10).

12. Brake or clutch lining according to any one of the preceding claims, **characterised in that** an encapsulated calibrating element is provided for compensation for temperature influences.

13. Method of measuring a force action or pressure action on a brake or clutch lining according to any one of the preceding claims, wherein for measurement of the force acting on the brake or clutch lining the capacitance of the capacitive element is measured and a calibration of the at least one capacitive element (10) is carried out during a moulding and/or hardening process in the manufacture of the brake or clutch lining.

## Revendications

1. Garniture de frein ou d'embrayage comprenant une plaque de support de garniture (14) et une garniture de friction (12) et comprenant au moins un élément capacitif (10) disposé entre la garniture de friction et la plaque de support, dont la capacité varie avec une force agissant sur la garniture de frein ou d'embrayage.

2. Garniture de frein ou d'embrayage selon la revendication 1, **caractérisée en ce que** l'élément capacitif (10) est réalisé pour détecter un déplacement relatif de la garniture de friction (12) et de la plaque de support de garniture (14).

3. Garniture de frein ou d'embrayage selon la revendication 1 ou 2, **caractérisée en ce que** l'élément capacitif (10) présente au moins deux couches fonctionnelles (16, 18) isolées électriquement l'une de l'autre et disposées l'une sur l'autre, avec des structures électriquement conductrices (20, 22, 24, 26).

4. Garniture de frein ou d'embrayage selon la revendication 3, **caractérisée en ce que** pour la détection séparée de différentes composantes de force ou de pression (30, 32) sur chaque couche fonctionnelle (16, 18) on prévoit au moins deux structures électriquement conductrices (20, 22, 24, 26) de géométrie différente.

5. Garniture de frein ou d'embrayage selon la revendication 3 ou 4, **caractérisée en ce que** des structures électriquement conductrices (20, 22, 24, 26) venant se superposer l'une sur l'autre de couches fonctionnelles (16, 18) disposées immédiatement les unes à côté des autres présentent à chaque fois une géométrie de même type.

6. Garniture de frein ou d'embrayage selon l'une quelconque des revendications précédentes 3 à 5, **caractérisée en ce que** les structures électriquement conductrices (24, 26) sont réalisées en partie en forme de rubans.

7. Garniture de frein ou d'embrayage selon l'une quelconque des revendications précédentes 3 à 6, **caractérisée en ce que** les structures électriquement conductrices sont réalisées en partie sous forme d'éléments de surface (20, 22) de géométrie ronde, elliptique, annulaire, triangulaire ou polygonale, notamment carrée ou rectangulaire.

8. Garniture de frein ou d'embrayage selon la revendication 7, **caractérisée en ce que** les éléments de surface (20, 22) de couches fonctionnelles (16, 18) situées à côté les unes des autres présentent des surfaces de tailles différentes, l'élément de surface le plus petit (20) venant s'appliquer complètement à l'intérieur de la périphérie de l'élément de surface le plus grand (22).

9. Garniture de frein ou d'embrayage selon l'une quelconque des revendications précédentes 7 ou 8, **caractérisée en ce que** les éléments de surface (20, 22) sont réalisés pour détecter un déplacement relatif des couches fonctionnelles (16, 18) dans la direction (32) parallèlement à la normale à leur surface, et **en ce que** les structures électriquement conductrices en forme de rubans sont prévues pour détecter un déplacement relatif des couches fonctionnelles dans la direction (30) perpendiculairement à la normale à leur surface.

10. Garniture de frein ou d'embrayage selon l'une quelconque des revendications précédentes, **caractérisée en ce que** les couches fonctionnelles (16, 18) sont réalisées sous forme de platines, de substrats ou de films avec une épaisseur de couche de l'ordre du millimètre à une plage submicronique.

11. Garniture de frein ou d'embrayage selon l'une quelconque des revendications précédentes, **caractérisée en ce que** l'on prévoit un blindage électrique autour de l'au moins un élément capacitif (10).

12. Garniture de frein ou d'embrayage selon l'une quelconque des revendications précédentes, **caractérisée en ce que** pour la compensation des influences de la température, on prévoit un élément de calibration encapsulé.

13. Procédé de mesure d'une influence de la force ou de la pression sur une garniture de frein ou d'embrayage selon l'une quelconque des revendications précédentes, dans lequel, pour la mesure de la force agissant sur la garniture de frein ou d'embrayage, on mesure la capacité de l'élément capacitif, et l'on effectue un calibrage de l'au moins un élément capacitif (10) pendant une opération de pressage et/ou de durcissement lors de la fabrication de la garniture de frein ou d'embrayage.
